# EUROPÄISCHE PATENTSCHRIFT

(11) **EP 0 677 355 B1**
(45) Veröffentlichungstag und Bekanntmachung des Hinweises auf die Patenterteilung: **26.08.1998**
(21) Anmeldenummer: 95200878.7
(22) Anmeldetag: 07.04.1995
(51) Int. Cl.: B23K 35/32, B23K 35/30, B23K 35/02

(54) **Hartlot**
Brazing material
Matériau pour brasage

(30) Priorität: 13.04.1994 AT 754/94
(43) Veröffentlichungstag der Anmeldung: 18.10.1995
(73) Patentinhaber: PLANSEE Aktiengesellschaft, 6600 Reutte, Tirol (AT)
(72) Erfinder: Eiter, Johann, A-6600 Breitenwang (AT); Huber, Thomas, A-6600 Reutte (AT); Köck, Wolfgang, Dr., A-6600 Reutte (AT)
(74) Vertreter: Lohnert, Wolfgang, Dr.

(56) Entgegenhaltungen:
- FR-A- 2 335 609
- GB-A- 487 263
- US-A- 3 335 002
- PATENT ABSTRACTS OF JAPAN vol. 4 no. 25 (M-001) ,5.März 1980 & JP-A-55 001920 (MITSUBISHI HEAVY IND LTD) 9.Januar 1980,

## Beschreibung

Die Erfindung betrifft die Verwendung eines speziellen Hartlotes für Hochtemperatur-Lötungen zum Verbinden von Teilen aus hochtemperaturfesten Werkstoffen in Festelektkrolyt-Hochtemperatur-Brennstoffzellen, insbesondere von Teilen aus den Werkstoffen Chrom und Legierungen auf Chrombasis.

Festelektrolyt-Hochtemperatur-Brennstoffzellen (SOFC-Brennstoffzellen) zeichnen sich durch einen keramischen Festelektrolyt auf ZrO₂-Basis aus, der auf beiden Seiten mit metallischen Elektroden in Verbindung steht, wobei an einer Elektrode Sauerstoff und an der anderen Elektrode der Brennstoff zugeführt wird. Als Brennstoff sind bei den SOFC-Brennstoffzellen neben Wasserstoff auch Kohlenwasserstoffe geeignet.

Bei der Herstellung von SOFC-Brennstoffzellen-Modulen können mehrere in Serie geschaltete, plan aufeinanderliegende Brennstoffzellen über sogenannte bipolare Platten zusammengeschaltet werden, wobei die bipolare Platte die Kathode der einen Zelle mit der Anode der benachbarten Zelle elektrisch leitend verbindet.

Als bevorzugte Materialien für die bipolaren Platten, aber auch für andere Bauteile der Hochtemperatur-Brennstoffzellen werden Legierungen auf Chrombasis verwendet. Die einzelnen Teile derartiger Brennstoffzellen werden vorteilhafterweise durch Löten miteinander verbunden, wobei an das Lot eine Vielzahl unterschiedlicher Anforderungen gestellt werden. So muß das Lot beispielsweise eine gute Wärmeleitfähigkeit und gute elektrische Leitfähigkeit aufweisen, der thermische Ausdehnungkoeffizient muß möglichst nahe an jenen des keramischen Elektrolyten und der metallischen Teile liegen und es muß vor allem eine gute Korrosionsbeständigkeit gegenüber den heißen Gasen, wie Luft, Wasserstoff sowie Kohlenwasserstoffe gegeben sein.

Bekannte Lote zum Hartlöten derartiger Werkstoffe sind Hartlote wie Zirkon, Titan, Vanadium oder solche auf Nickelbasis mit bis zu etwa 20 Gew.% Chromanteil und Anteilen von etwa 4 Gew.% Bor und/oder Silizium, die insbesondere beim Löten von Chrom oder Legierungen auf Chrombasis zum Einsatz kommen. Die letztgenannten Lote können neben Bor und/oder Silizium auch noch geringe Anteile an Molybdän und/oder Eisen enthalten.

Die genannten Lote auf Nickelbasis werden aus Pulvern in einem speziellen schmelzmetallurgischen Verfahren (Melt Spinning) in Form amorpher Folien hergestellt und werden als "rapidly solidified filler metals" beschrieben. Die Anteile an Bor und/oder Silizium im Lot dienen einerseits zur Senkung des Schmelzpunktes und andererseits zur Verbesserung der Benetzbarkeit des Lotes.

Nachteilig dabei ist, daß es durch die Bor- und/oder Siliziumanteile bei der Lötung zur Ausbildung intermetallischer Phasen mit unerwünschten Härten oder teilweise zu geringer Festigkeit kommt. Darüberhinaus weisen die bekannten Lote aufgrund ihres geringen Chromgehaltes einen Schmelzpunkt von max. etwa 1200°C auf, der für viele Anwendungsfälle oftmals nicht ausreichend ist.

Der Chemical Abstract 103-11394c beschreibt die Verwendung einer Ni-Cr-Legierung mit bis zu 44 Gew.% Chromanteil zum Aufschmelzen auf Porzellan in der Zahnprothetik. Der Chemical Abstract 108-60867w beschreibt die Verwendung einer Ni-Cr-Legierung mit bis zu 50 Gew.% Chromanteil für Gegenstände, die korrosiver Beanspruchung ausgesetzt sind. Beiden Vorveröffentlichungen ist die Verwendung derartiger Legierungen als Lotmaterial für Hochtemperatur-Lötungen nicht zu entnehmen.

Die Chemical Abstracts 119-165908, 114-231119j, 112-122117v sowie 120-251017b beschreiben Lotlegierungen auf Ni-Cr-Basis mit einem maximalen Chromanteil von 30 Gew.%. Derartige Lotlegierungen sind jedoch für Hochtemperatur-Lötverbindungen von Gegenständen aus Chrom bzw. Legierungen auf Chrombasis nur in unzureichendem Maße geeignet.

Die FR-A 2 335 609 nennt Lote der Zusammensetzung 50 Chrom, 50 Nickel und auch 50 Chrom, 49 Nickel, 1 Titan (jeweils Gew.%) zum bekannten Stand der Technik und beansprucht Schutz für eine Lotlegierung 42 - 46 Gew.% Chrom, 0,1 - 1 Gew.% Titan, 0,01 - 0,1 Gew.%C, bis 0,1 Gew.% Mn, Rest Nickel. Die Ausführungen enthalten keine Hinweise für die Verwendung gemäß vorliegender Erfindung.

Die GB-A 487 263 beschreibt ein Lot für die Herstellung dichter Gehäuse von Vakuumeinrichtungen. Neben vielen anderen Lotzusammensetzungen wird ein Lot 49 Gew.% Nickel, 41 Gew.% Chrom vorgeschlagen. Die Patentschrift gibt keine Hinweise auf eine Verwertung gemäß vorliegender Erfindung.

Aufgabe der vorliegenden Erfindung ist daher die Verwendung eines Hartlotes für Hochtemperatur-Lötverbindungen in Festelektrolyt-Hochtemperatur-Brennstoffzellen, so daß es bei der Lötung zu keinen versprödenden intermetallischen Phasen kommt, die Lote den korrosiven Medien in derartigen Zellen standhalten, hohe Gasdichtheit gewährleisten und Einsatztemperaturen der verlöteten Werkstoffe bis zu mindestens 1300°C ermöglichen.

Erfindungsgemäß wird die Verwendung eines Hartlotes nachfolgender Zusammensetzung beschrieben: 40 bis 70 Gew.% Chrom, bis zu 2 Gew.% von einem oder mehreren Metallen aus der Gruppe Vanadium, Niob, Tantal, Titan, Zirkon und Hafnium, bis zu 2 Gew.% von einem oder mehreren Metallen und/oder deren Oxiden aus der Gruppe Seltene Erden und Yttrium, Rest Nickel, besteht.

Das zur Verwendung vorgesehene Lot wird in hervorragender Weise allen eingangs genannten Eigenschaftsanforderungen gerecht, sodaß es sich für diesen speziellen Einsatzfall in besonderer Weise eignet.

Das Lot benetzt völlig überraschend die zu verbindenden Werkstoffe, und zwar auch ohne Anteile an Bor und/oder Silizium wie bisher für die vorliegende Anwendung vorgeschlagen, ganz ausgezeichnet. Das Lot weist einen gut kontrollierbaren Lotfluß auf, wodurch ein Austreten des Lotes aus dem Lotspalt und damit ein Nacharbeiten der verlöteten Teile vermieden wird. Das Lot ist insbesondere zum Verbinden von Chrom bzw. chromhaltigen Werkstoffen geeignet. Aber auch andere hochtemperaturfeste Materialien, insbesondere hochschmelzende Metalle wie Wolfram oder Molybdän, Graphit, aber auch keramische Werkstoffe wie SiC, TiC, TiB₂ und dgl. sind zum Verlöten unter Verwendung des erfindungsgemäßen Lotes gut geeignet.

Neben diesen Eigenschaften weist das Lot folgende, für die erfindungsgemäße Verwendung besonders vorteilhafte Eigenschaften auf: hohe Duktilität, eine gute Wärmeleitfähigkeit, eine gute elektrische Leitfähigkeit sowie eine ausgezeichnete Korrosionsbeständigkeit.

Durch Anteile von bis zu 2 Gew.% von einem oder mehreren der Metalle aus der Gruppe Vanadium, Niob, Tantal, Titan, Zirkon und Hafnium läßt sich die Duktilität des Lotes noch weiter verbessern, ohne daß andere gute Eigenschaften in größerem Ausmaß negativ beeinflußt werden.

Durch Anteile von bis zu 2 Gew.% an Seltenen Erden, Yttrium und/oder deren Oxiden wird eine Verbesserung des Lotes hinsichtlich seiner Heißgaskorrosionsbeständigkeit erreicht.

Als besonders vorteilhaft hat sich ein Lot mit 50 Gew.% Chrom, Rest Nickel erwiesen.

Bevorzugt wird das Lot in Form von dünnen Folien mit einer Folienstärke zwischen 50 und 200 µm eingesetzt.

Die Herstellung der Folien erfolgt dabei vorteilhafterweise durch pulvermetallurgische Verfahren.

Als besonders bevorzugtes Verfahren wird ein Rohling durch Mischen, Pressen und Sintern der pulverförmigen Ausgangsmaterialien hergestellt. Danach wird der Rohling luftdicht eingekannt und der eingekannte Rohling auf eine Blechstärke von etwa 2 mm warmgewalzt. Nach dem Entfernen des Kannungsmaterials wird das Blech auf die gewünschte Folienstärke kaltgewalzt. Neben der Folienform kann das erfindungsgemäße Lot auch in Drahtform hergestellt werden.

Im folgenden wird die Erfindung anhand von Beispielen näher erläutert:

### BEISPIEL 1:

Zur Herstellung einer bipolaren Platte für eine Hochtemperatur-Brennstoffzelle wurden mehrere Bleche mit den Abmessungen 200 x 200 mm und 2 mm Blechstärke aus einer Chromlegierung mit 5 Gew.% Eisen und 1 Gew.% Yttriumoxid unter Verwendung des erfindungsgemäßen Lotes flächig miteinander verlötet.

Dazu wurden die Bleche im Ultraschallbad gereinigt. Danach wurde der Lötaufbau mit drei übereinander angeordneten Blechen mit jeweils dazwischen angeordneten Lötfolien aus 50 Gew.% Nickel und 50 Gew.% Chrom mit einer Schichtstärke von 0,075 mm angeordnet. Der Lötaufbau wurde mit Gewichten, etwa 20 - 40 g/cm² beschwert und in einen Lötofen eingebracht. Die Lötung erfolgte unter Wasserstoffatmosphäre. Der Lötofen wurde von Raumtemperatur in 2 Stunden 30 Minuten auf 1350°C erhitzt und während 5 Minuten auf dieser Temperatur gehalten. Danach erfolgte die Abkühlung auf Raumtemperatur während 3 Stunden. Eine zerstörungsfreie Prüfung des Lotverbundes ergab einen einwandfreien Zustand der Verbindung der einzelnen Bleche untereinander. Aus den Lötspalten war kein Lötmaterial ausgetreten, sodaß eine Nachbearbeitung der bipolaren Platte entfallen konnte.

Die derart hergestellte bipolare Platte wurde in eine SOFC-Brennstoffzelle eingebaut und getestet. Nach einem Betrieb der Brennstoffzelle von etwa 1000 Stunden konnten an der bipolaren Platte keinerlei Risse oder negative Auswirkungen korrodierender Einflüsse festgestellt werden.

### BEISPIEL 2:

Zur Herstellung einer Lötfolie mit der Zusammensetzung 50 Gew.% Chrom, Rest Nickel, wurden 5 kg Chrompulver mit einer mittleren Korngröße von 30 µm sowie 5 kg Nickelpulver mit einer mittleren Korngröße von 3 µm miteinander vermischt. Danach wurde die Pulvermischung mit einem Preßdruck von 3 t/cm² zu einem Preßling mit den Abmessungen 25 x 170 x 400 mm verpreßt.
Der Preßling wurde bei einer Temperatur von 1200°C während 6 Stunden gesintert und anschließend in einen Stahlmantel mit 2 mm Wandstärke nach einem Evakuieren luftdicht eingeschweißt. Der eingekannte Sinterling wurde bei einer Temperatur von 1200°C auf eine Dicke von 2 mm warmgewalzt. Nach dem chemischen Entfernen des Stahlmantels wurde das Blech geschliffen und durch Kaltwalzen auf eine Folienstärke von 50 µm gebracht.

## Patentansprüche

1. Verwendung eines Hartlotes nachfolgender Zusammensetzung zum Verbinden von Teilen aus hochtemperaturfesten Werkstoffen in Festelektrolyt-Hochtemperatur-Brennstoffzellen:
- 40 - 70 Gew.% Chrom
- bis zu 2 Gew.% von einem oder mehreren Metallen aus der Gruppe Vanadium, Niob, Tantal, Titan, Zirkon und Hafnium
- bis zu 2 Gew.% von einem oder mehreren Metallen und/oder deren Oxiden aus der Gruppe seltene Erden und Yttrium
- Rest Nickel.

2. Verwendung eines Hartlotes nach Anspruch 1, dadurch gekennzeichnet, daß die zu verbindenden Teile aus Chrom und Legierungen auf Chrombasis bestehen.

3. Verwendung nach Anspruch 1 und 2, dadurch gekennzeichnet, daß das Hartlot aus 50 Gew.% Chrom, Rest Nickel besteht.

4. Verwendung nach Anspruch 1 bis 3, dadurch gekennzeichnet, daß das Hartlot als duktile Folie vorliegt.

5. Verwendung nach Anspruch 4, dadurch gekennzeichnet, daß die Herstellung des Hartlotes folgende Verfahrensschritte aufweist
- Herstellen eines Rohlings durch Mischen, Pressen und Sintern der pulverförmigen Ausgangsmaterialien
- luftdichtes Einkannen des Rohlings
- Warmwalzen des gekannten Rohlings auf eine Blechstärke von etwa 1 - 3 mm
- Entfernen des Kannungsmaterials
- Kaltwalzen des Bleches auf die gewünschte Folienstärke.

## Claims

1. Use of a brazing solder having the following composition for joining parts of high-temperature resistant materials in solid electrolyte high-temperature fuel cells:
- 40 wt.% - 70 wt.% chromium
- up to 2 wt.% of one or more metals of the group vanadium, niobium, tantalum, titanium, zirconium and hafnium
- up to 2 wt.% of one or more metals and/or their oxides from the group of rare earth metals and yttrium,
- the remainder nickel.

2. Use of a brazing solder according to claim 1, characterised in that the parts to be joined comprise chromium and chromium-based alloys.

3. Use according to claims 1 and 2, characterised in that the brazing material comprises 50 wt.% chromium and the remainder nickel.

4. Use according to claims 1 to 3, characterised in that the brazing material is in the form of a ductile foil.

5. Use according to claim 4, characterised in that the manufacture of the brazing material comprises the following process steps:
- production of a blank by mixing, pressing and sintering the pulverulent starting materials
- airtight canning of the blank
- hot rolling of the canned blank to a sheet thickness of about 1-3 mm
- removal of the canning material
- cold rolling of the sheet to the desired foil thickness.

## Revendications

1. Utilisation d'un matériau de brasage fort de la composition suivante, pour assembler des pièces en matériaux hautement réfractaires dans des piles à combustibles à haute température à électrolytes solides:
- 40 à 70% en poids de chrome
- jusqu'à 2% en poids d'un ou plusieurs des métaux du groupe constitué par le vanadium, ne niobium, le tantale, le titane, le zirconium et l'hafnium
- jusqu'à 2% en poids d'un ou plusieurs métaux d'un groupe constitué par les terres rares et l'yttrium et/ou de leurs oxydes
- solde nickel.

2. Utilisation d'un matériau de brasage fort selon la revendication 1, caractérisée en ce que les pièces à assembler se composent de chrome ou d'alliages à base de chrome.

3. Utilisation selon la revendication 1 et 2, caractérisée en ce que le matériau de brasage fort se compose de 50% en poids de chrome, solde nickel.

4. Utilisation selon l'une des revendications 1 à 3, caractérisée en ce que le matériau de brasage fort est en forme de feuille ductile.

5. Utilisation selon la revendication 4, caractérisée en ce que la fabrication du matériau de brasage fort comporte les étapes consistant à:
- fabriquer une ébauche par mélange, compression et frittage des matériaux de départ pulvérulents
- conditionner l'ébauche dans une enveloppe de façon étanche à l'air
- laminer à chaud l'ébauche conditionnée pour atteindre une épaisseur de tôle d'environ 1 à 3 mm
- enlever le matériau de conditionnement
- laminer à froid la tôle pour atteindre l'épaisseur de feuille souhaitée.
